Europäisches Patentamt

European Patent Office

Office européen des brevets

(19)

(11) Veröffentlichungsnummer: **0 227 029 B1**

## (12) EUROPÄISCHE PATENTSCHRIFT

(45) Veröffentlichungstag der Patentschrift: **11.12.91**

(51) Int. Cl.⁵: **B29C 43/22**, B29C 67/04, B29C 43/30, //B29K27:06

(21) Anmeldenummer: **86117573.5**

(22) Anmeldetag: **17.12.86**

(54) **Verfahren zum Herstellen von gefärbten homogenen Flächengebilden aus thermoplastischen Kunststoffen.**

(30) Priorität: **27.12.85 DE 3546215**

(43) Veröffentlichungstag der Anmeldung:
**01.07.87 Patentblatt 87/27**

(45) Bekanntmachung des Hinweises auf die Patenterteilung:
**11.12.91 Patentblatt 91/50**

(84) Benannte Vertragsstaaten:
**AT BE CH DE ES FR GB IT LI LU NL SE**

(56) Entgegenhaltungen:
**FR-A- 1 308 603**
**GB-A- 650 715**
**GB-A- 928 994**
**US-A- 2 917 781**

(73) Patentinhaber: **HÜLS TROISDORF AKTIENGE-SELLSCHAFT**
**Postfach 11 65**
**W-5210 Troisdorf(DE)**

(72) Erfinder: **Höver, Alexander**
**Eifelstrasse 25**
**W-5210 Troisdorf-Spichh(DE)**
Erfinder: **Simon, Manfred, Dr.**
**Schellenberg 17**
**W-5216 Niederkassel(DE)**
Erfinder: **Weiss, Richard, Dr.**
**Stresemannstrasse 16**
**W-5210 Troisdorf(DE)**

Rank Xerox (UK) Business Services

**Beschreibung**

Die Erfindung betrifft ein Verfahren zum Herstellen von gefärbten, homogenen Flächengebilden auf Basis thermoplastischer Kunststoffe gemäß dem Oberbegriff des Anspruchs 1.

Uni gefärbte, homogene Flächengebilde aus thermoplastischem Kunststoff, insbesondere aus PVC, in Gestalt von Bahnen oder Platten, mit Dicken über 1 mm, lassen sich nach dem Stand der Technik entweder über Extrusions-, Streich- oder Walzenverfahren herstellen, wobei ein einfarbiger, homogener Förmkörper erhalten wird, der vom Design her einen kalten Plastiklook und ein typisches Kunststoffimage vermittelt. Selbst Mischungen verschiedener Granulate und deren Verarbeitung über Extrusions- oder Walztechnik haben zwar eine den eingesetzten Farben entsprechende Farbdifferenzierung ergeben, aber keineswegs das dem Kunststoff anhaftende kalte Feeling genommen. Insbesondere bei der Verwendung von Bahnen oder Platten als Bodenbeläge und Wandbeläge wird jedoch besonderer Wert auf den ästhetischen Eindruck gelegt. Hierbei ist es ein Anliegen der Erfindung, Flächengebilde aus thermoplastischen Kunststoffen zu schaffen, die einen ästhetisch ansprechenden optischen Eindruck vermitteln und die gegebenenfalls richtungslos gemustert werden können.

Aus der GB-A-937 266 ist ein Verfahren zum Herstellen von gefärbten, homogenen Flächengebilden auf Basis thermoplastischer Kunststoffe, bei dem eine Kornmischung aus rieselfähigen Partikeln durch Zerkleinern von Formkörpern gewonnen werden, die zu einer gleichmäßigen Schicht aufgeschüttet und unter Wärmeeinwirkung bis zur Plastifizierung des thermoplastischen Kunststoffes zu einem zusammenhängenden Flächengebilde gesintert, dann unter Einwirkung von Druck und Wärme verpreßt werden, bekannt.

Die nach diesem Verfahren hergestellten Flächengebilde weisen jedoch eine wenig ansprechende Dessinierung auf, selbst wenn die Kornmischung aus mehreren Chargen von rieselfähigen Partikeln unterschiedlicher Formkörper gewonnen wurde.

Aufgabe der vorliegenden Erfindung ist es daher, die Dessinierung gattungsgemäßer Flächengebilde zu verbessern.

In überraschender Weise wurde diese Aufgabe dadurch gelöst, daß die Formkörper, aus denen durch Zerkleinern die rieselfähigen Partikel gewonnen werden, in sich mehrfarbig dessiniert sind.

Bei Verwendung von nur wenigen verschieden, mehrfarbig dessinierten Partikeln und durch unterschiedlichen Mischungsanteil in der Mischung bezüglich Korngröße und Kornverteilung sind unendlich viele Farb- und Strukturnuancierungen möglich.

Die erfindungsgemäß eingesetzten rieselfähigen Partikel besitzen eine feste körnige Struktur, im Gegensatz zu Dryblends, und diese körnige Struktur bleibt beim Sintern erhalten und verläuft nicht.

Nach einer Ausgestaltung der Erfindung werden durch Schleifen hergestellte Partikel, die eine Mischung von verschiedenen Korngrößen in regelloser Verteilung bilden, für die Herstellung der Bahnen oder Platten verwendet. Beispielsweise ist es möglich, verschieden bunt eingefärbte Platten oder Bahnen aus PVC-Zusammensetzung mit Weichmacher, Füllstoffen, Stabilisatoren, Pigmenten, die z.B. als Bodenbeläge verwendet werden, mit einem Schleifband bestimmter Körnungen abzuschleifen, wodurch ein zunächst für das bloße Auge unifarben erscheinender Schleifstaub mit einer Korngröße von beispielsweise 0,1 bis 2 mm anfällt. Trägt man diesen Schleifstaub z.B. über einen Trichter mit einem vorderseitig verstellbaren Rakel auf ein sich kontinuierlich darunter bewegendes Transportband, z.B. Trennpapier oder Stahlband, auf und läßt danach den aufgeschichteten Schleifstaub unter einem IR-Feld oder in einem Wärmekanal ansintern und bringt ihn anschließend auf einen Temperaturbereich, der für eine Plastifizierung erforderlich ist, so kann man dieses angesinterte Rohfell unter Druck zu einer homogenen, lunkerfreien, über die Gesamtstärke durchgehend dessinierten Bahn oder Platte verformen. Als Transportbandmaterialien lassen sich solche einsetzen, von denen die Bahn ohne Schwierigkeiten wieder abgezogen werden kann, wie Trennpapier, teflonisierte Gewebe oder auch Metallbänder, wie z.B. Stahlband. Die zur Sinterung erforderliche Wärmeenergie läßt sich über IR-Strahler, Warmluft oder auch im Hochfrequenzfeld erzielen, wobei die abschließende Komprimierung kontinuierlich über Walzwerke, Einfach- oder vorzugsweise Doppelbandpressen erfolgen kann. Je nach Oberflächenstruktur der Walzen oder Bänder lassen sich entsprechende Oberflächen prägen. Aus den Bahnen lassen sich gegebenenfalls Platten stanzen. Überraschend stelle sich dabei heraus, daß aus ursprünglich unifarbenem Schleifstaub eine polychrome, feinstrukturierte, brillante Dessinierung geworden ist, die nicht mehr den bisher gewohnten Kunststoff-Look von Kälte und Uniformität aufweist.

Dieses erfindungsgemäße Verfahren läßt sich durch Verwendung von nur wenigen verschieden, mehrfarbig dessinierten Rohfellen und durch unterschiedlichen Mischungsanteil der darauf hergestellten Schleifstäube derartig variieren, daß unendlich viele Farb- und Strukturnuancierungen möglich sind. Bevorzugt werden durch Schleifen hergestellte Körner oder Partikel in einer Kornmischung verwandt, bei denen der Anteil der Korngröße von 250 um bis 800 $\mu$m, 60 bis 90 Gew.-% ausmacht.

2

Es sind auch Abmischungen zwischen Schleifstaub und Agglomerat möglich und ebenfalls Kombinationen zwischen gefüllten und ungefüllten Systemen, d.h. PVC-Zusammensetzungen mit und ohne Füllstoff, wobei noch durch den Einsatz von transparenten Kunststoff-Partikeln über den polychromen Charakter hinaus ein räumlicher Eindruck vermittelt wird. Derartige polychrome, homogene Platten oder auch Bahnen lassen sich aber nicht nur aus Schleifstaub, Agglomerat, sondern auch aus Regenerat, das aus verschiedenfarbigen Randstreifen, die zerhackt und gemahlen wurden, herstellen. Ebenso läßt sich aus entsprechend eingefärbten Granulaten, die gemahlen wurden, über das Sinter-Preß-Verfahren ein ähnlicher Effekt erzielen. Ebenso läßt sich auch gemischtes PVC-Pulver mit Zusätzen über einen Plastifikator oder Extruder plastifizieren und zu Granulat oder Chips oder Scheibchen verarbeiten und die über Mühlen zu dem gewünschten Feinkorn, d.h. Feinkornmischung, vermahlen. Man kann die PVC-Zusammensetzungen transparent, uni oder auch verschiedenfarbig gestalten. Es können Gemische aus verschieden eingefärbten Stäuben und Körnungen eingesetzt werden. Dies ergibt nach dem Verpressen einen brillanten, fein aufgelösten,mehrfarbigen und nicht richtungsorientierten Grundton. Auch durch Korngröße und Kornverteilung der eingesetzten Partikel wird ein dezentes bis differenziertes Erscheinungsbild als Fein- oder auch Grobstruktur oder kleines bis großes Auflösungsvermögen erzielt.

Erfindungsgemäß kann durch Veränderung der Gestalt der Partikel, ob in Kornform, durch Schleifen hergestellt oder durch Mahlen unterschiedlicher Größe, die Struktur der Bahn und damit das Design, d.h. der polychrome Eindruck, verändert werden.

Gemäß der Erfindung werden die Partikel durch Zermahlen von in sich mehrfarbig dessinierten Formkörpern wie Agglomerat, Granulat oder daraus gewonnenen Chips, Regenerat oder anderen Formkörpern erhalten. Dabei können z.B. 1, 1,5 oder 2 mm Siebe zum Aussieben verwendet werden. Alle diese durch Mahlen hergestellten Kornmischungen enthalten thermisch vorbehandelte Partikel, die bereits schon einmal plastifiziert waren, und daher eine feste Körnerstruktur ergeben. Die thermische Vorbehandlung erfolgte beispielsweise bei der Herstellung des Agglomerates oder der Extrusion von Formkörpern, die zu Granulat, Chips, Randstreifen, Abfällen verarbeitet werden und das Ausgangsmaterial für die erfindungsgemäß herzustellenden und einzusetzenden Kornmischungen bilden.

Eine Mischung von Partikeln unterschiedlicher Herkunft, beispielsweise aus Mahlvorgängen, hat bevorzugt einen Anteil der Korngröße von 500 bis 2000 $\mu$m von etwa 30 bis 95 Gew.-%.

Darüber hinaus ist es möglich, Abmischungen von Partikeln verschiedener Herkunft, Einfärbungen, Strukturen und/oder Kornverteilungen zu verwenden.

Das polychrome Farbbild wird erfindungsgemäß insbesondere dann erhalten, wenn die Mischungen von Partikeln mit einer Kornverteilung verwendet werden, bei der jede Siebfraktion mindestens mit einem Minimalanteil von 0,1 Gew.-% und keine Siebfraktion mit einem größeren Anteil als 50 Gew.-% vertreten ist.

Besonders fein und gleichmäßig regellos dessinierte Bahnen oder Platten werden erhalten, wenn gemäß einem weiteren Vorschlag der Erfindung Kornmischungen enthaltend 80 bis 98 Gew.-% Anteil an Korngrößen von 300 bis 800 $\mu$m verwendet werden.

Nach einer weiteren Ausgestaltung der Erfindung werden insbesondere als Boden- und Wandbeläge zu verwendende Flächengebilde bei Anwendung des Verfahrens gemäß den Merkmalen des Anspruchs 5 erhalten.

Das Verfahren zum Herstellen der Flächengebilde wird bevorzugt in der Weise ausgeführt, daß die Mischung der Partikel zu einer Schicht mit einer Dicke von vorzugsweise etwa 5 bis 12 mm aufgeschüttet und auf Temperaturen bis zu etwa 210°C erwärmt und gesintert wird und dann bei einem Flächendruck im Bereich von 0,2 bis 20 N/mm² bzw. einem entsprechenden Liniendruck im Walzenspalt homogen zu einer Bahn oder Platte einer Enddicke von etwa 1,5 bis 4 mm verpreßt wird.

Zur Herstellung von gefüllten Bahnen oder Platten kann in weiterer Ausgestaltung der Erfindung gemäß den Merkmalen des Anspruchs 6 verfahren werden.

Derartige, polychrom dessinierte, homogene Bahnen- oder Plattenware läßt sich bevorzugt als Boden- oder Wandbelag verwenden und ist besonders dort einsatzmäßig prädestiniert, wo Abrieb oder Verschleiß eine dominierende Belastung darstellen. Ein derartiger vom Aufbau her homogener Belag kann in der gesamten Dicke verschleißen, ohne daß sich Dessin und Struktur verändern.

Durch das erfindungsgemäße Verfahren wird eine lebendige und auch räumliche Anmutung erzielt, die je nach farblicher Einstellung mono- bis polychromatische Wirkung erzielt. Eine besondere räumliche dreidimensionale Wirkung erzielt man durch transparentes Grundmaterial für einen Teil der Partikel, in die andersfarbige eingebettet sein können.

Diese erfindungsgemäße Verfahrenstechnik hat noch den Vorteil, neben einer neuen Dessinierungsmöglichkeit eingefärbte, thermoplastische Produkte, die als Abfall anfallen, im Recycling nicht nur mit einfachen Mitteln wieder aufzubereiten, sondern zu neuen, hochwertigen Produkten zu veredeln und damit den bisherigen Stand der Technik zu erweitern und homogene Bodenbeläge von Struktur und Feeling her

3

zu bereichern.

Unter PVC sollen im weiteren Sinne der Erfindung auch Copolymerisate mit Vinylacetat, Ethylen-Vinylacetat und gegebenenfalls Acrylat-Polymerisate verstanden werden, die allein oder in Abmischungen verwendet werden können.

Außer PVC können auch andere thermoplastische Kunststoffe, z.B. auf der Basis Ethylen-Vinylacetat, zu Flächengebilden gemäß der Erfindung verarbeitet werden.

Die Erfindung wird nachfolgend anhand der Zeichnung und anhand von Beispielen näher erläutert.

Es zeigen

Figur 1          das Schema einer Sinterstrecke mit Preßwalzenpaar,
Figur 2          das Schema einer Bandpresse,
Figur 3          das Schema einer Doppelbandpresse,
Figur 4 bis 8    verschiedene Dessins entsprechend verschiedenen Kornmischungen.

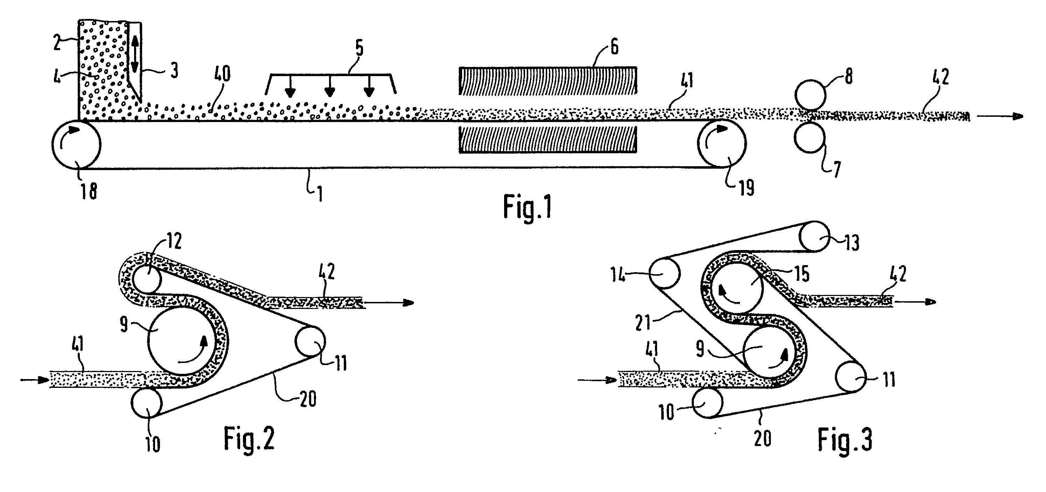

Für die kontinuierlichen Verfahren gemäß Figur 1, 2 und 3 wird als Träger bevorzugt ein endlos über zwei Umlenkrollen 18,19, von denen mindestens eine angetrieben ist, umlaufendes Transportband 1 verwendet. Als Transportband 1 lassen sich bevorzugt Releasepapier, Stahl- oder auch Teflon-(Polytetrafluorethylen-) Bänder einsetzen. Auf das Transportband 1 wird über den Trichter 2 mit verstellbarem Rakel 3 die aufzutragende Kornmischung 4 je nach gewünschter Enddicke des Flächengebildes, vorzugsweise in 5 bis 12 mm Dicke, geschichtet. Es können auch andere Auftragssysteme, beispielsweise Dosierrinnen, benutzt werden. Diese Schicht 40 wird dann kontinuierlich unter einem beispielsweise Infrarot-Feld 5 und/oder einem Wärmekanal 6 erwärmt, bis zur Plastifizierungstemperatur und zu einem durchgehenden Flächengebilde 41 gesintert. Bei diesem Sintervorgang verliert die Schicht 40 an Volumen und die Dicke verringert sich auf entsprechend 4 bis 10 mm etwa. Anschließend durchläuft die gesinterte Bahn 41 eine Preßstation, beispielsweise eine Prägeeinheit, bestehend aus einer Metallwalze 8 und Gummiwalze 7, die die Bahn 41 komprimiert und oberflächenmäßig glättet oder auch strukturiert. Danach verläßt das Endprodukt 42 die Anlage und wird der Konfektionierung zugeführt.

Zur Kompression der Sinterbahn 41 kann vorteilhaft, wie in der Figur 2 dargestellt, eine Bandpresse verwendet werden, wobei das über die Umlenkwalzen 10, 11, 12 endlos umlaufende Band so geführt ist, daß es die gesinterte Bahn 41 über eine vorgegebene Wegstrecke an die Bandwalze 9 andrückt. Die Bahn wird nach dem Abkühlen von dem Band 20 als Fertigbahn 42 abgezogen. Besonders vorteilhaft wird, wie in Figur 3 schematisch dargestellt, für die Kompression eine Doppelbandpresse verwendet, die mit zwei über Umlenkrollen 10, 11 bzw. 14, 13 endlos umlaufenden Bändern arbeitet, mit denen die Sinterbahn 41 an die Bandwalze 9 bzw. 15 alternierend angepreßt wird und nach dem Abkühlen und der Verdichtung von dem Band 20 abgezogen wird. Die Oberfläche der Bahn 42 kann entweder in der Bandpresse oder auch z.B. durch eine dahinter folgende Prägestation oder auch durch einen Schleif- und/oder Poliervorgang veredelt werden.

Die nachfolgenden Beispiele stellen mögliche Ausführungen des erfindungsgemäßen Verfahrens und der Herstellung und Verwendung von Kornmischungen dar.

Beispiel 1

Ein Grundansatz aus gefülltem Weich-PVC mit folgenden Anteilen

```
31    Gew.-Teilen   PVC-Vinnol Y 68 M (Firma Wacker-
                                                Chemie)
13    "         "   Diocthylphthalat
25    "         "   Kreide
0,15  "    .    "   Stabilisator auf Basis Sn
```

wird zunächst gemischt und jeweils 70 Gew.-Teile dieses Ansatzes separat mit folgenden Farbpigmenten versetzt und nach dem Mischen über einen Extruder granuliert:

| Farb-Nr.: | Farbe: | Gew.-Teile: |
|-----------|--------|-------------|
| 1 | mittelbraun | 0,7 |
| 2 | hellbraun | 0,987 |
| 3 | beige-grünlich | 1,337 |
| 4 | dunkelbraun | 0,252 |

Extrusionstemperatur 170°C, Granulat 4-5 mm ∅

Die Granulate werden danach nochmals in folgenden Gewichtsverhältnissen Farb-Nr. 1 : 2 : 3 : 4 = 1:1:1:0,76 gemischt und über Extruder und Walzwerk zu einer marmorierten Bahnenware verarbeitet. Beim Kalibrieren durch Schleifen mit Bändern von 50-er und 100-er Schleifkorn fällt ein Schleifstaub folgender Kornverteilung an (Naßsiebung):

| mm | % |
|-----|---|
| 0,04 | 0,7 |
| 0,04 - 0,063 | 0,4 |
| 0,063 - 0,1 | 0,2 |
| 0,1 - 0,125 | 0,9 |
| 0,125 - 0,2 | 2,0 |
| 0,2 - 0,25 | 7,8 |
| 0,25 - 0,315 | 16,4 |
| 0,315 - 0,5 | 35,5 |
| 0,5 - 0,8 | 32,5 |
| 0,8 - 1,0 | 3,1 |
| 1,0 - 1,6 | 0,4 |
| 1,6 - 2,0 | 0,1 |

Der so erhaltene Schleifstaub wird über einen Trichter mit in der Höhe verstellbarem Rakel bei einer Spalteinstellung von 5 mm auf eine Trennpapierbahn aufgetragen, siehe Figur 1, unter einem Infrarotstrahler von 0,6 m Länge (7,5 KW) und durch einen 6 m langen Warmluftkanal bei Temperaturen von 160 - 205°C und einer Geschwindigkeit von 1 m/Min. angesintert.

Die gesinterte Bahn kann danach in einem Arbeitsgang über Infrarotstrahler und Prägewalzwerk kontinuierlich zu einem 2 mm dicken polychromen, kompakten Unibelag verdichtet und geprägt werden.

Beispiel 2

Der aus Beispiel 1 erhaltene Schleifstaub wird mit einem aus einer anderen farblichen Kombination gewonnenen Schleifstaub B, der in folgender Zusammensetzung hergestellt wurde, im Verhältnis 1 : 1 gemischt:

| Farb.-Nr.: | Farbe: | Gew.-Teile: (auf 70 Teile Grundansatz gemäß Beispiel 1) |
|-----------|--------|-------------|
| 5 | dunkelgraubraun | 0,24 |
| 6 | dunkelrotbraun | 0,45 |
| 7 | mittelbraun | 0,4 |
| 8 | beige-rötlich | 1,0 |

Abmischung im Granulatverhältnis:
Farb.-Nr. 5 : 6 : 7 : 8 = 1 : 1 : 1 : 0,76
Der Schleifstaub hatte folgenden Kornaufbau:

5

| mm | | % |
|---|---|---|
|  | 0,04 | 0,9 |
| 0,04 | - 0,063 | 0,2 |
| 0,063 | - 0,1 | 0,2 |
| 0,1 | - 0,125 | 1,0 |
| 0,125 | - 0,2 | 3,9 |
| 0,2 | - 0,25 | 10,3 |
| 0,25 | - 0,315 | 16,3 |
| 0,315 | - 0,5 | 42,7 |
| 0,5 | - 0,8 | 23,5 |
| 0,8 | - 1,0 | 0,8 |
| 1,0 | - 1,6 | 0,1 |
| 1,6 | - 2,0 | 0,1 |

Das Schleifstaubgemisch A + B aus zwei verschieden marmoriert eingefärbten Bahnen mit insgesamt 8 Grundfarben wird analog Beispiel 1 gesintert und nach dem Abkühlen gestanzt und unter einer Presse bei einer Temperatur von 150°C zu einer 2 mm starken, brillanten polychrom strukturierten, homogenen Bahn verpreßt.

Beispiel 3

Aus den nach dem Beispiel 1 hergestellten Bahnen können Randstreifen geschnitten, diese zu 5 - 10 mm großen Chips zerkleinert und auf einer Alpinemühle mit einem 2 mm Sieb gemahlen werden. Die aus dem gemahlenen Regenerat analog Beispiel 1 gesinterten und verdichteten Bahnen und Platten ergeben ebenfalls in Abhängigkeit von Korngröße und Kornverteilung eine polychrome Struktur, deren Erscheinungsbild aus der Nähe betrachtet, wie auch bei den Beispielen 1 und 2, nicht orientiert und scharf abgegrenzt ist und aus weiterer Entfernung dem Charakter nach wie lebendige Unistrukturen wirken.

Der Kornaufbau war:

| mm | | % |
|---|---|---|
|  | -0,04 | 0,9 |
| 0,04 | - 0,063 | 1,0 |
| 0,063 | - 0,1 | 1,2 |
| 0,1 | - 0,125 | 1,4 |
| 0,125 | - 0,2 | 1,6 |
| 0,2 | - 0,25 | 1,2 |
| 0,25 | - 0,315 | 1,4 |
| 0,315 | - 0,5 | 4,8 |
| 0,5 | - 0,8 | 10,7 |
| 0,8 | - 1,0 | 11,8 |
| 1,0 | - 1,6 | 22,4 |
| 1,6 | - 2,0 | 41,6 |

Beispiel 4

Der in Beispiel 1 beschriebene Schleifstaub wird mit dem in Beispiel 3 gemahlenen Regenerat und aus Granulat gemahlenen Korngemisch im Verhältnis 2 : 4 : 4 gemischt weiter erarbeitet. Man erhält hier trotz der in der Abmischung unterschiedlichen Kornstrukturen und Plastifizierungsstufen eine brillante und klare polychrome Anmutung.

Der Kornaufbau war:

| mm | | % |
|---|---|---|
| | 0,04 | 0,6 |
| 0,04 | – 0,063 | 0,5 |
| 0,063 | – 0,1 | 0,6 |
| 0,1 | – 0,125 | 1,2 |
| 0,125 | – 0,2 | 2,0 |
| 0,2 | – 0,25 | 3,3 |
| 0,25 | – 0,315 | 5,3 |
| 0,315 | – 0,5 | 13,0 |
| 0,5 | – 0,8 | 24,6 |
| 0,8 | – 1,0 | 18,2 |
| 1,0 | – 1,6 | 14,6 |
| 1,6 | – 2,0 | 16,1 |

## Beispiel 5

69 Gew.-Teile     Escorene UL 00728 (Firma Esso) 1)

30 Gew.-Teile     JuraperleMHM (Firma Ulmer Füllstoffe) 2)

1 Gew.-Teil     Farbpigment-Farbstoff-Gemisch

Escorene UL 00728 wurde bei 120°C auf einem Walzwerk vorplastifiziert, dann Füllstoff und Farbgemisch portionsweise innerhalb von 5 Minuten zugegeben und noch 10 Minuten gewalzt. Danach wurde das Walzfell abgenommen und im warmen Zustand in Abschnitte von ca. 6 x 6 cm vorzerkleinert. Die abgekühlten Abschnitte wurden auf einer Schneidmühle mit 1,2 mm Sieb gemahlen.

Die Kornverteilung war:

| mm | | % |
|---|---|---|
| | 0,25 | 5,5 |
| 0,25 | – 0,315 | 1,0 |
| 0,315 | – 0,5 | 5,5 |
| 0,5 | – 0,8 | 16,7 |
| 0,8 | – 1,0 | 25,1 |
| 1,0 | – 1,25 | 34,2 |
| 1,25 | – 1,6 | 11,7 |
| 1,6 | – 2,0 | 0,3 |

Das so erhaltene Korn wurde mit anders pigmentiertem und gleichermaßen hergestelltem Material im Verhältnis 1:1:1:1 gemischt. Danach wird die Vormischung mit einer Stärke von 6 mm auf ein Stahlband aufgerakelt und gesintert. Die gesinterte und auf ca. 4 mm in der Stärke verminderte Bahn wurde in einer Doppelbandpresse bei einer Temperatur von 110°C zu einer 2 mm dicken polychromen Bahn verpreßt.

## Beispiel 6

Die nach dem Beispiel 1 hergestellte gesinterte Bahn kann ebenfalls in einem Arbeitsgang über Infrarotstrahler und Glättwalzwerk kontinuierlich zu einem 3 mm dicken polychromen rauhen rutschfesten

1) Ethylen-Vinylacetat-Copolymerisat     mit ca. 28 % Vinylacetat

2) Kreide

7

Belag mit geringerer Verdichtung durch entsprechende Kalibrierung im Walzenspalt gefertigt werden. Man erhält dadurch einen Belag mit Tiefenwirkung und besonderem textilen Aussehen.

Analog läßt sich ebenfalls die nach Beispiel 5 gefertigte gesinterte Bahn über Walzenspalt kalibrieren und so ein rutschfester polychromer Belag herstellen.

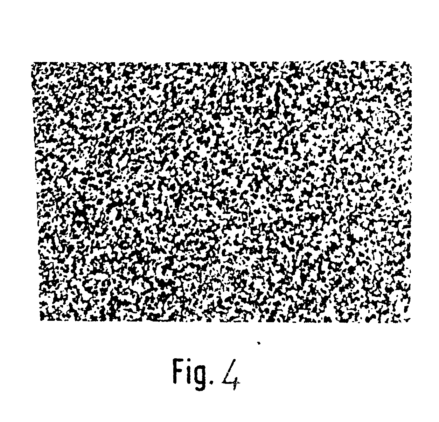

In den Figuren 4 bis 12 sind Dessins von Bodenbelägen gezeigt, die gemäß den Beispielen erhalten werden können. Der farbliche Eindruck fehlt durch die Schwarz-Weiß-Wiedergabe natürlich, jedoch kann die Feinstrukturierung zumindest in den Grundzügen erkannt werden, wenn auch die Farbnuancierungen verloren gehen.

Die hergestellten Bahnen bzw. Platten sind nicht nur an der Oberfläche dessiniert, sondern durch die ganze Dicke der Bahn hindurchgehend dessiniert, so daß im Gebrauch bei Abnutzung und Abrieb das Oberflächendessin nicht verlorengeht.

Figur 4 zeigt die Aufsicht auf ein Fertigprodukt aus vier verschiedenen Agglomeraten gemäß Beispiel 4, jedoch in anderer Kornverteilung.

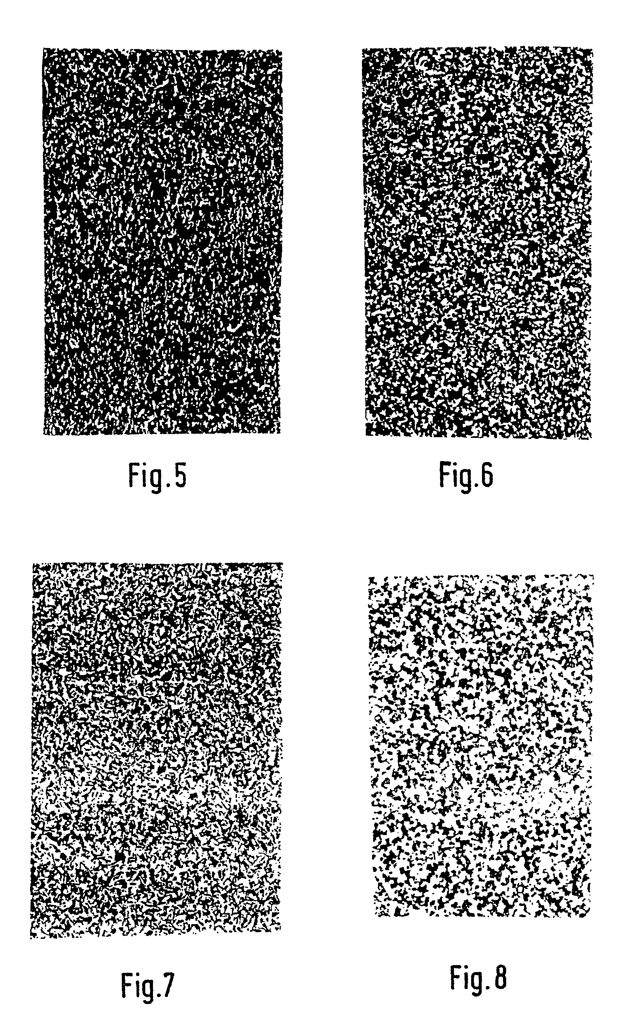

Die Figur 5 zeigt die Aufsicht auf die gesinterte Bahn gemäß Beispiel 1 in 1,3-facher Vergrößerung,und Figur 6 zeigt die Aufsicht auf das Fertigprodukt gemäß Beispiel 1, d.h. die verdichtete Bahn.

Figur 7 zeigt die Aufsicht auf das Fertigprodukt gemäß Beispiel 3.

Figur 8 zeigt die Aufsicht auf ein Fertigprodukt gemäß Beispiel 2, jedoch nur mit zwei verschiedenfarbigen Granulaten.

Die Oberflächen der verdichteten Bahnen oder Platten können noch veredelt werden, z.B. durch Prägen (glatt) oder in sehr geringer Profilierung bis zu maximal 100 $\mu$m Tiefe.

**Patentansprüche**

1. Verfahren zum Herstellen von gefärbten, homogenen Flächengebilden auf Basis thermoplastischer Kunststoffe, bei dem eine Kornmischung aus rieselfähigen Partikeln durch Zerkleinern von Formkörpern gewonnen werden, die zu einer gleichmäßigen Schicht aufgeschüttet und unter Wärmeeinwirkung bis zur Plastifizierung des thermoplastischen Kunststoffes zu einem zusammenhängenden Flächengebilde gesintert und dann unter Einwirkung von Druck und Wärme verpreßt werden, **dadurch gekennzeichnet**, daß die Formkörper in sich mehrfarbig dessiniert sind.

2. Verfahren nach Anspruch 1, **dadurch gekennzeichnet**, daß die Partikel durch Schleifen hergestellt sind.

3. Verfahren nach Anspruch 2, **dadurch gekennzeichnet**, daß die Kornmischung einen Anteil von 60 bis 90 Gew.-% von Partikeln mit einer Korngröße von 250 bis 800 $\mu$m enthält.

4. Verfahren nach einem der Ansprüche 1 bis 3, **dadurch gekennzeichnet**, daß man Kornmischungen enthaltend 80 bis 98 Gew.-% Anteil der Korngrößen von 300 bis 800 $\mu$m einsetzt.

5. Verfahren nach einem der Ansprüche 1 bis 4, **dadurch gekennzeichnet**, daß man aus einer PVC-Zusammensetzung enthaltend

    60 bis 80,     vorzugsweise 65 bis 75 Gew.-% E,S,M-PVC mit einem K-Wert von 50 bis 80,

    19 bis 39,     vorzugsweise 24 bis 34 Gew.-% Weichmacher, z. B. auf Basis von Phthalsäureestern, wie Diisooctylphthalat, Butylbenzylphthalat und ggf. epoxidiertes Sojabohnenöl,

    0,5 bis 2     Gew.-% Stabilisator auf Basis Barium-Cadmium und/oder Calcium-Zink und/oder Zinnverbindungen,

    bis 3     Gew.-% Farbmittel, wie lösliche und unlösliche Pigmente und/oder organische oder anorganische Farbstoffe

durch Plastifizieren bei Temperaturen oberhalb der Erweichungstemperatur, insbesondere etwa 130 bis 170° C, ein Ausgangsmaterial in Form von in sich mehrfarbig dessinierten Bahnen, Platten, Formkörpern, Granulat, Agglomerat erhält, aus dem man durch Zerkleinern, wie Mahlen oder Schleifen, die Kornmischung gewinnt.

6. Verfahren nach einem der Ansprüche 1 bis 4, **dadurch gekennzeichnet**, daß man aus einer PVC-Zusammensetzung enthaltend

    40 bis 60     Gew.-% E,S,M-PVC mit einem K-Wert von 50 bis 80,

    18 bis 24     Gew.-% Weichmacher, z. B. auf Basis von Phthalsäureestern, wie Diisooctylphthalat, Butylbenzylphthalat und ggf. epoxidiertes Sojabohnenöl,

20 bis 40    Gew.-% Füllstoffe, wie Calciumcarbonat,

0,5 bis 2    Gew.-% Stabilisator, z. B. auf Basis Barium-Cadmium und/oder Calcium-Zink und/oder Zinnverbindungen,

bis 3    Gew.-% Farbmittel, wie lösliche und unlösliche Pigmente, organische und anorganische Farbstoffe,

durch Plastifizieren bei Temperaturen oberhalb der Erweichungstemperatur, insbesondere etwa 130 bis 170° C, ein Ausgangsmaterial in Form von in sich mehrfarbig dessinierten Bahnen, Platten, Formkörpern, Granulat, Agglomerat enthält, aus dem man durch Zerkleinern, wie Mahlen, Schleifen, die Kornmischung gewinnt.

**7.** Verfahren nach einem der Ansprüche 1 bis 4, **dadurch gekennzeichnet,** daß als thermoplastischer Kunststoff ein Copolymerisat auf der Basis von Ethylenvinylacetat verwendet wird.

**8.** Verfahren nach einem der Ansprüche 1 bis 7, **dadurch gekennzeichnet,** daß man aus der Kornmischung eine Schicht mit einer Dicke von etwa 5 bis 12 mm auf das Trägerband aufschüttet und diese auf Temperaturen bis zu etwa 210° C erwärmt, sintert und dann bei einem Flächendruck im Bereich von etwa 0,2 bis 20 N/mm² bzw. einem entsprechenden Liniendruck im Walzenspalt homogen zu einer Bahn oder Platte einer Enddicke von etwa 1,5 bis 4 mm verpreßt.

**9.** Verfahren nach einem der Ansprüche 1 bis 8, **dadurch gekennzeichnet,** daß die Verpressung unter Einwirkung von Druck und Wärme im Walzenspalt mit geringer Verdichtung erfolgt, so daß ein rauhes, ggf. noch poröses Flächengebilde erhalten wird.

## Claims

**1.** Process for the production of coloured, homogeneous flat shaped articles based on thermoplastic plastics in which a granular mixture of tricklable particles is obtained by comminution of moulded articles which are distributed in a uniform layer and sintered under the action of heat up until plasticisation of the thermoplastic plastics to form a coherent flat article and then compressed under the action of pressure and heat, characterised in that the moulded articles are patterned in many colours.

**2.** Process according to claim 1, characterised in that the particles are produced by abrasion.

**3.** Process according to claim 2, characterised in that the granular mixture has a content of 60 to 90% by weight of particles with a particle size of 250 to 800 $\mu$m.

**4.** Process according to one of claims 1 to 3, characterised in that granular mixtures containing 80 to 98% by weight content of grain sizes of 300 to 800 $\mu$m are employed.

**5.** Process according to one of claims 1 to 4, characterised in that there is obtained from a PVC composition containing 60 to 80, preferably 65 to 75% by weight of E, S, M-PVC with K-value of 50 to 80,

19 to 39,    preferably 24 to 34% by weight of plasticiser, e.g. based on phthalic acid esters like diisooctyl phthalate, butylbenzyl phthalate and optionally epoxidised soya bean oil,

0.5 to 2    % by weight of stabiliser based on barium-cadmium, and/or calcium-zinc and/or tin compounds,

up to 3    % by weight of colourants like soluble and insoluble pigments and/or organic or inorganic dyes

by plasticising at temperatures above the softening temperature, in particular about 130 to 170°C, a starting material in the form of multicoloured patterned sheets, plates, shaped bodies, granulate, agglomerate, from which the granular mixture is obtained by comminution, like grinding or abrasion.

**6.** Process according to one of claims 1 to 4, characterised in that there is obtained from a PVC composition containing

40 to 60    % by weight of E,S,M-PVC with a K-value of 50 to 80,

18 to 24    % by weight of plasticiser, e.g. based on phthalic acid esters like dioctyl phthalate, butylbenzyl phthalate and possibly epoxidised soya bean oil,

20 to 40    % by weight of fillers like calcium carbonate,

0.5 to 2 % by weight of stabiliser, e.g. based on barium-cadmium and/or calcium-zinc and/or tin compounds,

up to 3 % by weight of colourants like soluble and soluble pigments, organic and inorganic dyes,

by plasticising at temperatures above the softening temperature, in particular about 130 to 170°C, a starting material in the form of multicoloured patterned sheets, plates, shaped bodies, granulate, agglomerate, from which the granular mixture is obtained by comminution, such as grinding, abrasion.

7. Process according to one of claims 1 to 4, characterised in that an ethylene-vinyl acetate copolymer is used as thermoplastic plastics.

8. Process according to one of claims 1 to 7, characterised in that a layer with a thickness of about 5 to 12 mm is distributed on the support sheet from the granular mixture and this is heated to temperatures of up to about 210°C, sintered and then compressed uniformly to form a sheet or plate having a final thickness of about 1.5 to 4 mm at a surface pressure in the range of about gap between rollers.

9. Process according to one of claims 1 to 8, characterised in that the compression takes place under the action of pressure and heat in the gap between rollers with slight compression so that a crude, possibly still porous, flat shaped article is obtained.

**Revendications**

1. Procédé de fabrication de structures planes homogènes colorées, à base de matières thermoplastiques, dans lequel on obtient, par fragmentation de pièces façonnées, un mélange granulaire de particules s'écoulant librement, qui est étalé en une couche régulière et aggloméré par chauffage jusqu'a plastification de la matière thermoplastique en une structure plane cohérente, et ensuite comprimé sous l'action de la pression et de la chaleur, caratérisé en ce que les piéces façonnées présentent, dans la masse, des motifs multicolores.

2. Procédé selon la revendication 1, caractérisé en ce que les particules sont fabriquées par meulage.

3. Procédé selon la revendication 2, caractérisé en ce que le mélange granulaire contient une proportion de 60 à 90 % en poids de particules ayant une dimension de grain de 250 à 800 μm.

4. Procédé selon une des revendicatications 1 à 3, caractérisé en ce que l'on utilise des mélanges granulaires contenant de 80 à 98 % en poids de grains ayant une dimension de 300 à 800 μm.

5. Procédé selon une des revendications 1 à 4, caractérisé en ce que l'on obtient un matériau de départ, sous forme de bandes continues, plaques, pièces façonnées, granulé ou aggloméré, à motifs multicolores dans la masse, par plastification, à des températures supérieures à son point de ramollissement, en particulier d'environ 130 à 170° C, d'une composition de PVC renfermant

60 à 80, de préférence 65 à 75 % en poids de E,S,M-PVC ayant un indice K de 50 à 80,

19 à 39, de préférence 24 à 34 % en poids d'un plastifiant, p.ex. à base d'esters d'acide phtalique, tels que phtalate de diisooctyle, phtalate de butyle et de benzyle, et éventuellement huile de soja époxydée,

0,5 à 2 % en poids de stabilisant à base de composés de baryum-cadmium et/ou de calcium-zinc et/ou d'étain,

jusqu'à 3 % en poids d'agents colorants, tels que des pigments solubles ou non et/ou des colorants organiques ou minéraux,

matériau à partir duquel on obtient le mélange granulaire par fragmentation, comme broyage ou meulage.

6. Procédé selon une des revendications 1 à 4, caractérisé en ce que l'on obtient un matériau de départ, sous forme de bandes continues, plaques, pièces façonnées, granulé ou aggloméré, à motifs multicolores dans la masse, par plastification, à des températures supérieures à son point de ramollissement, en particulier d'environ 130 à 170° C, d'une composition en PVC renfermant

40 à 60, de préférence 65 à 75 % en poids de E,S,M-PVC ayant un indice K de 50 à 80,

18 à 24, de préférence 24 à 34 % en poids d'un plastifiant, p.ex. à base d'esters d'acide phtalique, tels que phtalate de diisooctyle, phtalate de butyle et de benzyle, et éventuellement huile de soja époxydée,

20 à 40    % de charges, telles que du carbonate de calcium,

0,5 à 2    % en poids de stabilisant à base de composés de baryum-cadmium et/ou de calcium-zinc et/ou d'étain,

jusqu'à 3    % en poids d'agents colorants, tels que des pigments solubles ou non, des colorants organiques ou minéraux,

matériau à partir duquel on obtient le mélange granulaire par fragmentation, comme broyage ou meulage.

7. Procédé selon une des revendications 1 à 4, caractérisé en ce que l'on utilise, comme matière thermoplastique, un copolymère à base d'éthylène et d'acétate de vinyle.

8. Procédé selon une des revendications 1 à 7, caractérisé en ce que l'on étale, sur la bande support, une couche de 5 à 12 mm d'épaisseur du mélange granulaire, et que l'on chauffe celle-ci à des températures allant jusqu'à environ 210° C, qu'on l'agglomère et qu'on la comprime ensuite de façon homogène, sous une pression de surface d'environ 0,2 à 20 N/mm² ou une pression linéaire équivalente entre cylindres, en une bande continue ou en une plaque d'épaisseur finale comprise entre environ 1,5 et 4 mm.

9. Procédé selon une des revendications 1 à 8, caractérisé en ce que la compression se fait, entre les cylindres, sous l'action de la pression et de la chaleur, avec un faible compactage, si bien que l'on obtient une structure plans rugueuse, éventuellement encore poreuse.

Fig.1

Fig.2

Fig.3

Fig. 4

Fig.5

Fig.6

Fig.7

Fig.8